(19) Europäisches Patentamt
European Patent Office
Office européen des brevets

(11) EP 4 641 266 A1

(12) EUROPEAN PATENT APPLICATION
published in accordance with Art. 153(4) EPC

(43) Date of publication:
**29.10.2025 Bulletin 2025/44**

(21) Application number: **23907822.3**

(22) Date of filing: **21.12.2023**

(51) International Patent Classification (IPC):
***G02B 5/20*** (2006.01) ***G02B 5/22*** (2006.01)
***B32B 7/12*** (2006.01) ***B32B 7/023*** (2019.01)
***C09J 7/38*** (2018.01) ***C09J 11/04*** (2006.01)
***C09J 133/06*** (2006.01) ***C09J 143/04*** (2006.01)
***C08K 5/3492*** (2006.01)

(52) Cooperative Patent Classification (CPC):
**B32B 7/023; B32B 7/12; C08K 5/3492; C09J 7/38; C09J 11/04; C09J 133/06; C09J 143/04; G02B 5/20; G02B 5/22**

(86) International application number:
**PCT/KR2023/021298**

(87) International publication number:
**WO 2024/136539 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2022 KR 20220182420**

(71) Applicant: **SAMSUNG SDI CO., LTD.**
**Yongin-si, Gyeonggi-do 17084 (KR)**

(72) Inventors:
- **HEO, Se Mi**
  **Suwon-si Gyeonggi-do 16678 (KR)**
- **KIM, Tae Mi**
  **Suwon-si Gyeonggi-do 16678 (KR)**
- **KIM, Ji Yeon**
  **Suwon-si Gyeonggi-do 16678 (KR)**
- **KIM, Ji Ho**
  **Suwon-si Gyeonggi-do 16678 (KR)**
- **HAN, Jae Hyun**
  **Suwon-si Gyeonggi-do 16678 (KR)**
- **SHIN, Dong Myeong**
  **Suwon-si Gyeonggi-do 16678 (KR)**
- **KIM, Il Jin**
  **Suwon-si Gyeonggi-do 16678 (KR)**

(74) Representative: **Michalski Hüttermann & Partner Patentanwälte mbB**
**Kaistraße 16A**
**40221 Düsseldorf (DE)**

# (54) OPTICAL MEMBER AND OPTICAL DISPLAY DEVICE

(57) Provided are an optical member and an optical display device comprising same, the optical member comprising: a substrate layer having an 80% or higher light transmittance at a wavelength of 350-400 nm; and an adhesive film adhering to one surface or the other surface of the substrate layer and having a 4% or lower light transmittance at a wavelength of 350-400 nm.



Processed by Luminess, 75001 PARIS (FR)

## Description

[Technical Field]

The present invention relates to an optical member and an optical display device. More particularly, the present invention relates to an optical member that can prevent a light emitting diode from being damaged by UV light, includes an adhesive film with good cohesion to provide good peel strength and foldability, and can secure blocking of UV light, reduction in manufacturing costs, and process simplification, and an optical member including the same.

[Background Art]

With self-emissive light emitting diodes, a light emitting diode display has a thinner thickness than a liquid crystal display and can provide high efficiency even with low power. As a result, light emitting diode displays are replacing liquid crystal displays and are widely used in mobile displays, such as TVs, mobile phones, and the like.

However, when the light emitting diode is exposed to UV light, the light emitting diode can be damaged and become ineffective, thereby causing reduction in lifespan of the light emitting diode display. Therefore, an optical display device requires an optical member capable of absorbing UV light to prevent UV light from reaching the light emitting diodes. Although the optical member can be disposed at any location within the optical display device, it is desirable that the optical member be stacked on the light emitting diode.

In one method, for an optical member including an optical film and an adhesive film, the optical film may include a UV absorbent. However, use of the UV absorbent in the optical film can cause increase in manufacturing costs of the optical member and there can be a need for an additional process for assembly of the optical member to a display device.

Since the light emitting diode display requires foldable properties, the adhesive film is also required to have flexibility. However, when an adhesive film formed of a photocurable adhesive composition contains a UV absorbent, the adhesive film can suffer from reduction in cohesion through reduction in curing degree of the adhesive composition, thereby providing restriction in securing good peel strength and good foldability.

The background technique of the present invention is disclosed in Japanese Unexamined Patent Publication No. 2013-072951 and the like.

[Disclosure]

[Technical Problem]

It is an aspect of the present invention to provide an optical member that includes an adhesive film having low light transmittance at a wavelength of 350 nm to 400 nm and high cohesion to provide high peel strength and good foldability while securing reduction in manufacturing costs and process simplification in assembly of the optical member to a display device.

[Technical Solution]

One aspect of the present invention relates to an optical member.

1. The optical member includes: a base layer having a light transmittance of 80% or more at a wavelength of 350 nm to 400 nm; and an adhesive film adhesively attached to one surface or the other surface of the base layer and having a light transmittance of 4% or less at a wavelength of 350 nm to 400 nm.
2. In 1, the adhesive film may include a triazine UV absorbent.
3. In 1 and 2, the triazine UV absorbent may include a hydroxyphenyl triazine UV absorbent.
4. In 1 to 3, the triazine UV absorbent may be present in an amount of 0.1% by weight (wt%) to 4 wt% in the adhesive film.
5. In 1 to 4, the adhesive film may have a peel strength of 600 gf/inch or more.
6. In 1 to 5, the adhesive film may have a storage modulus of 0.2 MPa or less at -20°C.
7. In 1 to 6, the adhesive film may be formed of a thermosetting adhesive composition or a photocurable adhesive composition.
8. In 1 to 7, the adhesive film may be formed of a photocurable adhesive composition including a UV absorbent, a polymer of a monomer mixture, and a photoinitiator.
9. In 8, the monomer mixture may include an alkyl group-containing (meth)acrylic monomer, a hydroxyl group-containing (meth)acrylic monomer, and a heteroalicyclic group-containing (meth)acrylic monomer.
10. In 1 to 9, the heteroalicyclic group-containing (meth)acrylic monomer may be present in an amount of 1 wt% to 10

wt% in the monomer mixture.

11. In 1 to 10, the monomer mixture may further include an alkylene glycol group-containing (meth)acrylic monomer.

12. In 1 to 11, the heteroalicyclic group-containing (meth)acrylic monomer and the alkylene glycol group-containing (meth)acrylic monomer may be present in a total amount of 5 wt% to 20 wt% in the monomer mixture.

13. In 1 to 12, the photoinitiator may be present in an amount of 0.0001 parts by weight to 5 parts by weight relative to 100 parts by weight of the monomer mixture.

14. In 1 to 13, the photocurable adhesive composition may include at least one selected from among a crosslinking agent and a silicone-containing (meth)acrylate.

15. In 14, the silicon-containing (meth)acrylate may be represented by Formula 1:

[Formula 1]

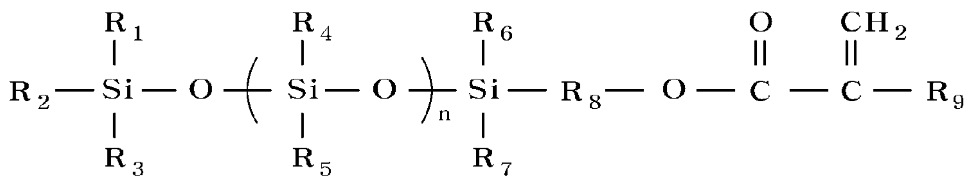

(where $R_1$, $R_2$, $R_3$, $R_4$, $R_5$, $R_6$, and $R_7$ are each independently hydrogen, a $C_1$ to $C_{10}$ alkyl group, a $C_3$ to $C_{10}$ cycloalkyl group, or a $C_6$ to $C_{10}$ aryl group; $R_8$ is a $C_1$ to $C_{10}$ alkylene group or a $C_6$ to $C_{10}$ arylene group; $R_9$ is hydrogen or a methyl group; and n is an integer of 10 to 100).

16. In 1 to 15, the base layer may contain 0.05 wt% or less of a triazine UV absorbent having a maximum absorption wavelength of 370 nm to 430 nm.

Another aspect of the present invention relates to an optical display device.

The optical display device includes the optical member according to the present invention.

[Advantageous Effects]

The present invention provides an optical member that includes an adhesive film having low light transmittance at a wavelength of 350 nm to 400 nm and high cohesion to provide high peel strength and good foldability while securing reduction in manufacturing costs and process simplification in assembly of the optical member to a display device.

[Best Mode]

Hereinafter, embodiments of the present invention will be described in detail with reference to the accompanying drawings. However, it should be understood that the present invention may be embodied in different ways and is not limited to the following embodiments. Here, the following embodiments are provided such that the disclosure herein will be thorough and complete and the idea of the present invention can be fully conveyed to those skilled in the art.

The terminology used herein is for the purpose of describing exemplary embodiments and is not intended to limit the scope of the invention. Herein, the singular forms "a," "an," and "the" are intended to include the plural forms as well, unless the context clearly indicates otherwise.

Herein, the term "(meth)acryl" refers to acryl and/or methacryl.

Herein, "light transmittance" means total transmittance. Light transmittance in a wavelength range of X to Y mean an average value of light transmittance values in the corresponding wavelength range.

Herein, "homopolymer glass transition temperature" may refer to a glass transition temperature (Tg) measured on a homopolymer of a target monomer using a differential scanning calorimeter (DSC Discovery, TA Instruments Inc.). Specifically, the homopolymer of the target monomer is heated to 180°C at a heating rate of 20°C/min, slowly cooled to -100°C, and heated to 100°C at a heating rate of 10°C/min to obtain data on an endothermic transition curve, followed by determining the glass transition temperature at an inflection point of the endothermic transition curve.

Herein, "average particle diameter of organic nanoparticles" refers to a particle diameter of the organic nanoparticles, as measured in a water-based or organic solvent using a Zetasizer nano-ZS (Malvern Co., Ltd.) and represented by a Z-average value, and is observed by SEM/TEM.

As used herein to represent a specific numerical range, the expression "X to Y" means "≥ X and ≤ Y".

It is known in the art that various light emitting diodes including organic light emitting diodes are vulnerable to UV

light. Damage to the light emitting diodes by UV light can reduce the lifespan of the light emitting diodes, which in turn can shorten the lifespan of an optical display device.

In general, as methods for reducing light transmittance in the ultraviolet spectrum including wavelengths in the range of 350 nm to 400 nm, the use of a monomer or fillers having a light absorption effect in this wavelength range may be considered. Among these methods, the use of a light absorbent, that is, a UV absorbent, is the simplest method. However, incorporation of the UV absorbent into a base layer described below can provide various problems, such as high manufacturing costs in manufacture of an optical member, the need for additional processes in assembly of the optical member to a display device, and the like. Therefore, there is a need to develop an optical member that can block UV light from reaching the light emitting diode without containing a UV absorbent in the base layer.

The present invention relates to an optical member included in an optical display device, in which the optical member includes a base layer and an adhesive film having low light transmittance at a wavelength of 350 nm to 400 nm and high cohesion.

As the adhesive film has low light transmittance at a wavelength of 350 nm to 400 nm, the adhesive film can prevent damage to the light emitting diode caused by UV light by blocking UV light including external incident light having a wavelength of 350 nm to 400 nm from reaching the light emitting diode, when the optical member is applied to an optical display device, particularly a light emitting diode display.

According to the present invention, the base layer has high light transmittance at a wavelength of 350 nm to 400 nm, whereas the adhesive film has a significantly low light transmittance at a wavelength of 350 nm to 400 nm. Therefore, the present invention does not require the base layer to contain a UV absorbent, thereby preventing problems caused by the presence of the UV absorbent in the base layer.

In one embodiment, the base layer may have a light transmittance of 80% or more, for example, 85% to 100%, at a wavelength of 350 nm to 400 nm, preferably at a wavelength of 380 nm.

In one embodiment, the adhesive film may have a light transmittance of 4% or less, for example 0.1% to 3%, for example 2% to 3%, at a wavelength of 350 nm to 400 nm, preferably at a wavelength of 380 nm. Within this range, the adhesive film can sufficiently prevent damage to the light emitting diode by UV light when applied to an optical display device.

Hereinafter, the adhesive film and the base layer of the present invention will be described in detail.

## Adhesive film

The adhesive film may be formed of a thermosetting adhesive composition or a photocurable adhesive composition.

In one embodiment, the adhesive film may include a thermally cured product of the thermosetting adhesive composition. The adhesive film formed of the thermosetting adhesive composition may be prepared by applying the thermosetting adhesive composition to the base layer or a release film, followed by heat treatment, thereby preventing a problem in terms of curing rate in the presence of the UV absorbent. The thermosetting adhesive composition may be selected from any type of adhesive compositions capable of providing an adhesive film having good foldability as described below.

For example, the thermosetting adhesive composition includes a UV absorbent, a (meth)acrylic copolymer, and a curing agent, in which a composition and a weight average molecular weight of a monomer mixture for the (meth)acrylic copolymer may be adjusted to provide good foldability. The UV absorbent will be described below in more detail.

In other embodiments, the adhesive film may include a light-cured product of the photocurable adhesive composition. The adhesive film according to the present invention is formed of the photocurable adhesive composition while controlling each component and/or content of the adhesive composition to compensate for reduction in photocuring rate of the adhesive composition for the adhesive film due to the UV absorbent and to secure high cohesion described below.

The photocurable adhesive composition may include a UV absorbent, a polymer of a monomer mixture, and a photoinitiator.

The UV absorbent may be selected from any type of UV absorbent so as to ensure that the adhesive film has a light transmittance of 4% or less at a wavelength of 350 nm to 400 nm.

In one embodiment, the UV absorbent may have a maximum absorption wavelength of 370 nm to 430 nm, preferably 390 nm to 430 nm. Within this range, the UV absorbent can secure low light transmittance of the adhesive film at a wavelength of 350 nm to 400 nm when contained even in a small amount. Here, "maximum absorption wavelength" means a wavelength at which the UV absorbent exhibits a maximum absorption peak, that is, a wavelength at which the UV absorbent exhibits a maximum absorbance on a wavelength-dependent absorbance curve. The maximum absorption wavelength may be measured by a typical method known to those skilled in the art.

In one embodiment, the UV absorbent may include at least one selected from among benzotriazole UV absorbents, benzophenone UV absorbents, triazine UV absorbents, and combinations thereof.

In the present invention, a triazine UV absorbent, preferably a hydroxyl group-containing triazine UV absorbent, more preferably a hydroxyphenyl triazine UV, may be used as the UV absorbent in consideration of UV absorptivity, high compatibility with monomers described below, and ease of securing cohesion of the adhesive film described below.

The triazine UV absorbents may include 4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-Triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, 2,4-diphenyl-6-(2-hydroxy-4-benzyloxyphenyl)-1,3,5-triazine, 2,4-diphenyl-6-(2-hydroxy-4-butoxyethoxy)-1,3,5-triazine, 2,4-bis(2-hydroxy-4-butoxyphenyl)-6-(2,4-butoxyphenyl)-1,3,5-triazine, 2,4,6-tris(2-hydroxy-4-methoxyphenyl)-1,3,5-triazine, 2,4,6-tris(2-hydroxy-4-ethoxyphenyl)-1,3,5-triazine, 2,4,6-tris(2-hydroxy-4-propoxyphenyl)-1,3,5-triazine, 2,4,6-tris(2-hydroxy-4-butoxyphenyl)-1,3,5-triazine, 2,4,6-tris(2-hydroxy-4-butoxyphenyl)-1,3,5-triazine, 2,4,6-tris(2-hydroxy-4-hexyloxyphenyl)-1,3,5-triazine, 2,4,6-tris(2-hydroxy-4-octyloxyphenyl)-1,3,5-triazine, 2,4,6-tris(2-hydroxy-4-dodecyloxyphenyl)-1,3,5-triazine, 2,4,6-tris(2-hydroxy-4-benzyloxyphenyl)-1,3,5-triazine, 2,4,6-tris(2-hydroxy-4-ethoxyethoxyphenyl)-1,3,5-triazine, 2,4,6-tris(2-hydroxy-4-butoxyethoxyphenyl)-1,3,5-triazine, 2,4,6-tris(2-hydroxy-4-propoxyethoxyphenyl)-1,3,5-triazine, 2,4,6-tris(2-hydroxy-4-methoxycarbonylpropyloxyphenyl)-1,3,5-triazine, 2,4,6-tris(2-hydroxy-4-ethoxycarbonylethyloxyphenyl)-1,3,5-triazine, 2,4,6-tris(2-hydroxy-4-(1-(2-ethoxyhexyloxy)-1-oxopropan-2-yloxy)phenyl)-1,3,5-triazine, 2,4,6-tris(2-hydroxy-3-methyl-4-methoxyphenyl)-1,3,5-triazine, 2,4,6-tris(2-hydroxy-3-methyl-4-ethoxyphenyl)-1,3,5-triazine, 2,4,6-tris(2-hydroxy-3-methyl-4-propoxyphenyl)-1,3,5-triazine, 2,4,6-tris(2-hydroxy-3-methyl-4-butoxyphenyl)-1,3,5-triazine, 2,4,6-tris(2-hydroxy-3-methyl-4-butoxyphenyl)-1,3,5-triazine, 2,4,6-tris(2-hydroxy-3-methyl-4-hexyloxyphenyl)-1,3,5-triazine, 2,4,6-tris(2-hydroxy-3-methyl-4-octyloxyphenyl)-1,3,5-triazine, 2,4,6-tris(2-hydroxy-3-methyl-4-dodecyloxyphenyl)-1,3,5-triazine, 2,4,6-tris(2-hydroxy-3-methyl-4-benzyloxyphenyl)-1,3,5-triazine, 2,4,6-tris(2-hydroxy-3-methyl-4-ethoxyethoxyphenyl)-1,3,5-triazine, 2,4,6-tris(2-hydroxy-3-methyl-4-butoxyethoxyphenyl)-1,3,5-triazine, 2,4,6-tris(2-hydroxy-3-methyl-4-propoxyethoxyphenyl)-1,3,5-triazine, 2,4,6-tris(2-hydroxy-3-methyl-4-methoxycarbonylpropoxyphenyl)-1,3,5-triazine, 2,4,6-tris(2-hydroxy-3-methyl-4-ethoxycarbonylethoxyphenyl)-1,3,5-triazine, and 2,4,6-tris(2-hydroxy-3-methyl-4-(1-(2-ethoxyhexyloxy)-1-oxopropan-2-yloxy)phenyl)-1,3,5-triazine.

In the adhesive film, the UV absorbent may be present in an amount of 0.1 wt% to 4 wt%, for example, 0.1 wt%, 0.2 wt%, 0.3 wt%, 0.4 wt%, 0.5 wt%, 0.6 wt%, 0.7 wt%, 0.8 wt%, 0.9 wt%, 1.0 wt%, 1.1 wt%, 1.2 wt%, 1.3 wt%, 1.4 wt%, 1.5 wt%, 1.6 wt%, 1.7 wt%, 1.8 wt%, 1.9 wt%, 2.0 wt%, 2.1 wt%, 2.2 wt%, 2.3 wt%, 2.4 wt%, 2.5 wt%, 2.6 wt%, 2.7 wt%, 2.8 wt%, 2.9 wt%, 3.0 wt%, 3.1 wt%, 3.2 wt%, 3.3 wt%, 3.4 wt%, 3.5 wt%, 3.6 wt%, 3.7 wt%, 3.8 wt%, 3.9 wt%, or 4 wt%, preferably 1 wt% to 2.5 wt%, more preferably 1 wt% to 2 wt%. Within this range, the adhesive film can secure light transmittance at a wavelength of 350 nm to 400 nm and can prevent increase in haze and yellowness index (YI) caused by excessive addition of the UV absorbent.

The UV absorbent may be present in an amount of 0.1 to 4 parts by weight, for example, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, or 4 parts by weight, preferably 1 part by weight to 2 parts by weight, relative to 100 parts by weight of the monomer mixture described below. Within this range, the adhesive film can secure light transmittance at a wavelength of 350 nm to 400 nm and can prevent increase in haze and yellowness index (YI) caused by excessive addition of the UV absorbent.

The monomer mixture may include an alkyl group-containing (meth)acrylic monomer, a hydroxyl group-containing (meth)acrylic monomer, and a heteroalicyclic group-containing (meth)acrylic monomer.

The alkyl group-containing (meth)acrylic monomer serves to facilitate formation of a matrix of the adhesive film. In one embodiment, the alkyl-containing (meth)acrylic monomer may include (meth)acrylates having an unsubstituted linear or branched $C_1$ to $C_{10}$ alkyl group at an ester site thereof. For example, the alkyl group-containing (meth)acrylic monomer may include at least one selected from among 2-ethylhexyl (meth)acrylate, n-butyl (meth)acrylate, isooctyl (meth)acrylate, propyl (meth)acrylate, t-butyl (meth)acrylate, isobutyl (meth)acrylate, pentyl (meth)acrylate, hexyl (meth)acrylate, heptyl (meth)acrylate, octyl (meth)acrylate, nonyl (meth)acrylate, and decyl (meth)acrylate, preferably at least one selected from among 2-ethylhexyl (meth)acrylate, n-butyl (meth)acrylate, and isooctyl (meth)acrylate, more preferably 2-ethylhexyl (meth)acrylate.

The alkyl group-containing (meth)acrylic monomer may have a homopolymer glass transition temperature of -80°C to -20°C, specifically -80°C to - 40°C. Within this range, the adhesive film can have good foldability at low temperature and under high temperature/humidity conditions.

In the monomer mixture, the alkyl group-containing (meth)acrylic monomer may be present in an amount of 10 wt% to 85 wt%, for example, 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 26 wt%, 27 wt%, 28 wt%, 29 wt%, 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, 45 wt%, 46 wt%, 47 wt%, 48 wt%, 49 wt%, 50 wt%, 51 wt%, 52 wt%, 53 wt%, 54 wt%, 55 wt%, 56 wt%, 57 wt%, 58 wt%, 59 wt%, 60 wt%, 61 wt%, 62 wt%, 63

wt%, 64 wt%, 65 wt%, 66 wt%, 67 wt%, 68 wt%, 69 wt%, 70 wt%, 71 wt%, 72 wt%, 73 wt%, 74 wt%, 75 wt%, 76 wt%, 77 wt%, 78 wt%, 79 wt%, 80 wt%, 81 wt%, 82 wt%, 83 wt%, 84 wt%, or 85 wt%, preferably 60 wt% to 85 wt%, or 70 wt% to 85 wt%. Within this range, the adhesive film can have good foldability at low temperature and under high temperature/-humidity conditions.

The hydroxyl-containing (meth)acrylic monomer serves to impart peel strength to the adhesive film. The hydroxyl group-containing (meth)acrylic monomer may include a $C_1$ to $C_{10}$ (meth)acrylate containing at least one hydroxyl group at an ester site thereof. For example, the hydroxyl group-containing (meth)acrylic monomer may include at least one selected from among 2-hydroxybutyl (meth)acrylate, 4-hydroxybutyl (meth)acrylate, 2-hydroxyethyl (meth)acrylate, 2-hydroxypropyl (meth)acrylate, 3-hydroxypropyl (meth)acrylate, and 6-hydroxyhexyl (meth)acrylate, without being limited thereto.

The hydroxyl-containing (meth)acrylic monomer may have a homopolymer glass transition temperature of -70°C to 0°C, preferably -60°C to -10°C, more preferably -50°C to -20°C. Within this range, the adhesive film can achieve improvement in peel strength and foldability.

In the monomer mixture, the hydroxyl group-containing (meth)acrylic monomer may be present in an amount of 5 wt% to 40 wt%, for example, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 26 wt%, 27 wt%, 28 wt%, 29 wt%, 30 wt%, 31 wt%, 32 wt%, 33 wt%, 34 wt%, 35 wt%, 36 wt%, 37 wt%, 38 wt%, 39 wt%, or 40 wt%, for example, 5 wt% to 30 wt%, for example, 5 wt% to 20 wt%. Within this range, the adhesive film can achieve improvement in bonding strength and durability.

The heteroalicyclic group-containing (meth)acrylic monomer serves to improve cohesion of the adhesive film through intermolecular interaction (hydrogen bonding) between the monomers even when the curing rate of the composition is reduced due to the UV absorbent. As a result, the adhesive film can prevent deterioration in adhesive strength while minimizing increase in low temperature modulus, thereby securing high peel strength and good foldability.

The heteroalicyclic group-containing (meth)acrylic monomer is a (meth)acrylic monomer having a $C_3$ to $C_8$ ring having oxygen and/or sulfur as a heteroatom, for example, a (meth)acryloyl morpholine.

In the monomer mixture, the heteroalicyclic group-containing (meth)acrylic monomer may be present in an amount of 1 wt% to 10 wt%, for example, 1 wt%, 2 wt%, 3 wt%, 4 wt%, 5 wt%, 6 wt%, 7 wt%, 8 wt%, 9 wt%, or 10 wt%, preferably 1 wt% to 5 wt%. Within this range, the adhesive film can easily secure cohesion and adhesion.

In one embodiment, the alkyl group-containing (meth)acrylic acid monomer, the hydroxyl group-containing (meth)acrylic acid monomer, and the heteroalicyclic group-containing (meth)acrylic acid monomer may be present in a total amount of 90 wt% or more, for example, 90 wt% to 100 wt%, for example, 90 wt% to 95 wt%, in the monomer mixture. Within this range, the adhesive film can easily realize the effects of the invention.

The monomer mixture may further include an alkylene glycol group-containing (meth)acrylic monomer.

The alkylene glycol-containing (meth)acrylic monomer serves to compensate for reduction in flexibility of the adhesive film due to the presence of the heteroalicyclic group-containing (meth)acrylic monomer when the curing rate of the composition is reduced due to the UV absorbent. In addition, the alkylene glycol group-containing (meth)acrylate contains an alkylene glycol group, thereby easily imparting foldability to the adhesive film. Herein, "alkylene glycol group" means ($C_2$ to $C_4$ alkylene-O-).

The heteroalicyclic group-containing (meth)acrylic monomer and the alkylene glycol-containing (meth)acrylic monomer may be present in an amount of 5 wt% to 20 wt%, for example, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, or 20 wt%, preferably 10 wt% to 15 wt%, in the monomer mixture. Within this range, the adhesive film can easily realize the effects of the invention.

The alkylene glycol group-containing (meth)acrylic monomer may have a homopolymer glass transition temperature of -90°C to -55°C, preferably -90°C to - 60°C, more preferably -75°C to -60°C. Within this range, the adhesive film can have low modulus at low temperature while improving foldability at low temperature. The alkylene glycol group-containing (meth)acrylate may include a mono-functional acrylate having an ethylene oxide group ($-CH_2CH_2O-$) or a propylene oxide group ($-CH_2CH_2CH_2O-$), preferably an ethylene oxide group.

The alkylene glycol group-containing (meth)acrylic monomer may include, for example, an ether-based (meth) acrylate containing 1 mole or more, for example, 2 to 20 moles, of ethylene glycol. Specifically, an ethylene glycol group-containing (meth)acrylate may include at least one selected from among a poly(ethylene glycol) methyl ether (meth) acrylate containing 6 to 13 moles of ethylene glycol, poly(ethylene glycol) ethylhexyl ether (meth)acrylate containing 2 to 10 moles of ethylene glycol, and poly(ethylene glycol) octyl ether (meth)acrylate containing 2 to 20 moles of ethylene glycol.

Preferably, the alkylene glycol group-containing (meth)acrylate may include at least one selected from among di(ethylene glycol) 2-ethylhexyl ether (meth)acrylate, triethylene glycol 2-ethylhexyl ether (meth)acrylate, and di(ethylene glycol) octyl ether (meth)acrylate.

In the monomer mixture, the alkylene glycol group-containing (meth)acrylic monomer may be optionally present in an amount of 40 wt% or less, for example, 0 wt%, 1 wt%, 2 wt%, 3 wt%, 4 wt%, 5 wt%, 6 wt%, 7 wt%, 8 wt%, 9 wt%, 10

wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 26 wt%, 27 wt%, 28 wt%, 29 wt%, 30 wt%, 31 wt%, 32 wt%, 33 wt%, 34 wt%, 35 wt%, 36 wt%, 37 wt%, 38 wt%, 39 wt%, or 40 wt%, preferably 0.5 wt% to 40 wt%, more preferably 5 wt% to 20 wt%. Within this range, the adhesive film can have improved folding endurance at low temperature.

In one embodiment, the alkyl group-containing (meth)acrylic acid monomer, the hydroxyl group-containing (meth)acrylic acid monomer, the heteroalicyclic group-containing (meth)acrylic acid monomer, and the alkylene glycol group-containing (meth)acrylic acid monomer may be present in a total amount of 98 wt% or more, for example, 98 wt% to 100 wt%, for example, 100 wt%, in the monomer mixture. Within this range, the adhesive film can easily realize the effects of the present invention.

The monomer mixture may further include another co-monomer other than the alkyl group-containing (meth) acrylic monomer, the hydroxyl group-containing (meth)acrylic monomer, the heteroalicyclic group-containing (meth) acrylic monomer, and the alkylene glycol group-containing (meth)acrylic monomer. The co-monomer may be included in the polymer to provide additional effects to the adhesive film.

The co-monomer refers to a monomer different from the monomers described above and may include at least one selected from among an amine group-containing monomer, an alkoxy group-containing monomer, a phosphoric acid group-containing monomer, a sulfonic acid group-containing monomer, a phenyl group-containing monomer, a silane group-containing monomer, a carboxylic acid group-containing monomer, and an amide group monomer.

The amine group-containing monomer may be an amine group-containing acrylic monomer, such as monomethyl aminoethyl acrylate, monoethyl aminoethyl acrylate, monomethyl aminopropyl acrylate, monoethyl aminopropyl acrylate, dimethyl aminoethyl acrylate, diethyl aminoethyl acrylate, N-tert-butyl aminoethyl acrylate, acryloxyethyltrimethylammonium chloride acrylate, and the like, without being limited thereto.

The alkoxy group-containing monomer may include 2-methoxyethyl (meth)acrylate, 2-methoxypropyl (meth) acrylate, 2-ethoxypropyl (meth)acrylate, 2-butoxypropyl (meth)acrylate, 2-methoxypentyl (meth)acrylate, 2-ethoxypentyl (meth)acrylate, 2-butoxyhexyl (meth)acrylate, 3-methoxypentyl (meth)acrylate, 3-ethoxypentyl (meth)acrylate, and 3-butoxyhexyl (meth)acrylate, without being limited thereto.

The phosphoric acid group-containing monomer may be a phosphoric acid group-containing acrylic monomer, such as 2-methacryloyloxyethyl diphenyl phosphate acrylate, trimethacryloyloxyethyl phosphate acrylate, triacryloyloxyethyl phosphate acrylate, and the like, without being limited thereto.

The sulfonic acid group-containing monomer may be a sulfonic acid group-containing acrylic monomer, such as sodium sulfopropyl acrylate, sodium 2-sulfoethyl acrylate, sodium 2-acrylamido-2-methylpropane sulfonate, and the like, without being limited thereto.

The phenyl group-containing monomer may be a phenyl group-containing acrylic vinyl monomer, such as p-tert-butyl phenyl acrylate, o-biphenyl acrylate, phenoxy ethyl acrylate, and the like, without being limited thereto.

The silane group-containing monomer may be a silane group-containing vinyl monomer, such as 2-acetoacetoxyethyl acrylate, vinyl trimethoxysilane, vinyl triethoxysilane, vinyl tris(2-methoxyethyl)silane, vinyl triacetoxysilane, acryloyloxypropyl trimethoxysilane, and the like, without being limited thereto.

The carboxylic acid group-containing monomer may include acrylic acid, 2-carboxyethyl acrylate, 3-carboxypropyl acrylate, 4-carboxybutyl acrylate, itaconic acid, crotonic acid, maleic acid, fumaric acid, and maleic anhydride, and the like, without being limited thereto.

The amide group monomer may include acrylamide, N-methylacrylamide, N-methylolacrylamide, N-methoxymethylacrylamide, N,N-methylenebisacrylamide, N-hydroxyethylacrylamide, N,N-diethylacrylamide, and the like, without being limited thereto.

In the monomer mixture, the co-monomer may be present in an amount of 30 wt% or less, preferably 0 wt% to 30 wt%. The co-monomer serves to control adhesion to an adherend and to provide optical properties.

The photoinitiator serves to form an adhesive film by curing the adhesive composition or to polymerize remaining monomers after polymerization of the monomer mixture in the composition for adhesive films. Preferably, the photoinitiator includes a photo-radical initiator.

The photoinitiator may be selected from any photoinitiators capable of inducing polymerization reaction of a radical polymerizable compound described above in a curing process by irradiation with light and the like. For example, the photoinitiator may include a benzoin, hydroxyl ketone, amino ketone, or phosphine oxide photoinitiator. Specifically, the photoinitiator may include benzoin, benzoin methyl ether, benzoin ethyl ether, benzoin isopropyl ether, benzoin n-butyl ether, benzoin isobutyl ether, acetophenone compounds, such as 2,2-dimethoxy-2-phenylacetophenone, 2,2'-dietoxy acetophenone, 2,2'-dibutoxy acetophenone, 2-hydroxy-2-methyl propiophenone, p-t-butyl trichloroacetophenone, p-t-butyl dichloroacetophenone, 4-chloroacetophenone, 2,2'-dichloro-4-phenoxyacetophenone, and the like, dimethylaminoacetophenone, 2,2-dimethoxy-2-phenyl acetophenone, 2,2-diethoxy-2-phenylacetophenone, 2-hydroxy-2-methyl-1-phenylpropan-1-one, 2-benzyl-2-dimethyl amino-1-(4-morpholinophenyl)-butane-1-one, 1-hydroxycyclohexylphenylketone, 2-methyl-1-[4-(methylthio)phenyl]-2-morpholino-propan-1-one, 4-(2-hydroxyethoxy)phenyl-2-(hydroxy-2-propyl) ketone, benzophenone, p-phenyl benzophenone, 4,4-diethylaminobenzophenone, dichlorobenzophenone, 2-methylanthraquinone, 2-ethylanthraquinone, 2-t-butylanthraquinone, 2-aminoanthraquinone, 2-methylthioxanthone, 2-ethylthioxanthone, 2-chlorothioxanthone, 2,4-dimethylthioxanthone, 2,4-diethylthioxanthone, benzyl dimethylketal, acetophenone dimethylketal, p-dimethylamino benzoic acid ester, oligo[2-hydroxy-2-methyl-1-[4-(1-methylvinyl)phenyl]propanone], and 2,4,6-trimethylbenzoyl-diphenyl-phosphine oxide, without being limited thereto.

The photoinitiator may present in an amount of 0.0001 parts by weight to 5 parts by weight, specifically 0.5 parts by weight to 3 parts by weight, more specifically 0.5 parts by weight to 1 part by weight, relative to 100 parts by weight of the monomer mixture. Within this range, the photoinitiator allows complete curing of the adhesive composition, can prevent deterioration in transmittance of the adhesive film due to residual initiator, can reduce bubble generation, and can exhibit good reactivity.

The adhesive composition may further include a crosslinking agent. The crosslinking agent may increase the degree of crosslinking of the adhesive composition to increase mechanical strength of the adhesive film.

The crosslinking agent may include a polyfunctional (meth)acrylate capable of being cured by actinic radiation. For example, the crosslinking agent may include bifunctional acrylates, such as 1,4-butanediol di(meth)acrylate, 1,6-hexanediol di(meth)acrylate, neopentyl glycol di(meth)acrylate, polyethylene glycol di(meth)acrylate, neopentyl glycol adipate di(meth)acrylate, dicyclopentanyl di(meth)acrylate, caprolactone-modified dicyclopentenyl di(meth)acrylate, ethylene oxide-modified di(meth)acrylate, di(meth)acryloxyethyl isocyanurate, allylated cyclohexyl di(meth)acrylate, tricyclodecane dimethanol (meth)acrylate, dimethylol dicyclopentane di(meth)acrylate, ethylene oxide-modified hexahydrophthalic acid di(meth)acrylate, tricyclodecane dimethanol (meth)acrylate, neopentyl glycol-modified trimethylpropane di(meth)acrylate, adamantane di(meth)acrylate, 9,9-bis[4-(2-acryloyloxyethoxy)phenyl]fluorine, and the like; trifunctional acrylates, such as trimethylolpropane tri(meth)acrylate, dipentaerythritol tri(meth)acrylate, propionic acid-modified dipentaerythritol tri(meth)acrylate, pentaerythritol tri(meth)acrylate, propylene oxide-modified trimethylolpropane tri(meth)acrylate, trifunctional urethane (meth)acrylates, tris(meth)acryloxyethyl isocyanurate, and the like; tetrafunctional acrylates, such as diglycerin tetra(meth)acrylate, pentaerythritol tetra(meth)acrylate, and the like; pentafunctional acrylates, such as dipentaerythritol penta(meth)acrylate and the like; and hexafunctional acrylates, such as dipentaerythritol hexa(meth)acrylate, caprolactone-modified dipentaerythritol hexa(meth)acrylate, and urethane (meth)acrylates (for example, a reaction product of an isocyanate monomer and trimethylolpropane tri(meth)acrylate), and the like, without being limited thereto. Preferably, the crosslinking agent includes a $C_5$ to $C_{15}$ polyfunctional (meth)acrylate of triol, tetraol, or hexaol.

The crosslinking agent may be present in an amount of 0.001 parts by weight to 5 parts by weight, specifically 0.1 parts by weight to 3 parts by weight, more specifically 0.1 parts by weight to 1 part by weight, relative to 100 parts by weight of the monomer mixture or the polymer of the monomer mixture. Within this range, the adhesive film can exhibit good peel strength and improved reliability.

The adhesive composition may not include organic nanoparticles. In one embodiment, the organic nanoparticles may be organic nanoparticles described below.

The adhesive composition may further include organic nanoparticles.

The organic nanoparticles can further improve reliability of the adhesive film at high temperature by increasing storage modulus of the adhesive film at high temperature to prevent delamination, slight lifting and/or bubble generation at high temperature. The organic nanoparticles have a high glass transition temperature, thereby improving the modulus of the adhesive film at high temperature.

The organic nanoparticles may have an average particle diameter of 10 nm to 400 nm, specifically 10 nm to 300 nm, more specifically 30 nm to 280 nm, still more specifically 50 nm to 280 nm. Within this range of average particle diameter, the organic nanoparticles do not affect foldability of the adhesive film and can secure good transparency of the adhesive film by securing a total transmittance of about 90% or more in the visible spectrum.

A difference in index of refraction between the organic nanoparticles and the polymer of the monomer mixture including the (meth)acrylic monomer may be 0.1 or less, specifically 0.0 to 0.05, more specifically 0.0 to 0.02. Within this range, the adhesive film can exhibit good transparency.

In one embodiment, the organic nanoparticles may have an index of refraction of 1.35 to 1.70, specifically 1.40 to 1.60. Within this range, the adhesive film can exhibit good transparency.

The organic nanoparticles may have a core-shell structure or a simple structure, such as bead type nanoparticles, without being limited thereto. In one embodiment, the organic nanoparticles may have a core-shell structure, in which the core and the shell satisfy the following Relation 1. That is, the organic nanoparticles may include nanoparticles in which the core and the shell are formed of organic materials. With the organic nanoparticles having the core-shell structure, the adhesive film can exhibit good foldability and balance between elasticity and flexibility.

[Relation 1]

$$Tg(c) < Tg(s),$$

where Tg(c) is the glass transition temperature (unit: °C) of the core and Tg(s) is the glass transition temperature (unit: °C) of the shell.

Herein, the term "shell" means an outermost layer of the organic nanoparticle. The core may be a spherical particle. In some embodiments, the core may further include an additional layer surrounding the spherical particle so long as the core has a glass transition temperature satisfying the above relation.

Specifically, the core may have a glass transition temperature of -150°C to 10°C, specifically -150°C to -5°C, more specifically -150°C to -20°C. Within this range, the adhesive film can have good viscoelasticity at low temperature and/or at room temperature. The core may include at least one selected from among poly(alkyl acrylate), polysiloxane or polybutadiene having a glass transition temperature within this range.

The poly(alkyl acrylate) may include at least one selected from among poly(methyl acrylate), poly(ethyl acrylate), poly(propyl acrylate), poly(butyl acrylate), poly(isopropyl acrylate), poly(hexyl acrylate), poly(hexyl methacrylate), poly(ethylhexyl acrylate), poly(ethylhexyl methacrylate), and polysiloxane, without being limited thereto.

The polysiloxane may be, for example, an organosiloxane (co)polymer. The organosiloxane (co)polymer may be non-crosslinked or crosslinked organosiloxane (co)polymer. The crosslinked organosiloxane (co)polymer may be used to secure impact resistance and colorability. Specifically, the crosslinked organosiloxane (co)polymer may include crosslinked dimethylsiloxane, methylphenylsiloxane, diphenylsiloxane, or a mixture thereof. With a copolymer of two or more organosiloxanes, the nanoparticles may have an index of refraction of 1.41 to 1.50.

A crosslinked state of the organosiloxane (co)polymer can be determined based on the degree of dissolution in various organic solvents. As the degree of crosslinking of the organosiloxane (co)polymer intensifies, the degree of dissolution of the organosiloxane (co)polymer is reduced. A solvent for determination of the crosslinked state may include acetone, toluene, and the like. Specifically, the organosiloxane (co)polymer may have a moiety which is not soluble in acetone or toluene. The organosiloxane copolymer may include 30% or more of insolubles in toluene.

The organosiloxane (co)polymer may further include an alkyl acrylate crosslinked polymer. The alkyl acrylate crosslinked polymer may include methyl acrylate, ethyl acrylate, n-butyl acrylate, 2-ethylhexyl acrylate, and the like. For example, the alkyl acrylate crosslinked polymer may be n-butyl acrylate or 2-ethylhexyl acrylate having a low glass transition temperature.

Specifically, the shell may have a glass transition temperature of 15°C to 150°C, specifically 35°C to 150°C, more specifically 50°C to 140°C. Within this range, the organic nanoparticles can exhibit good dispersion in the acrylic copolymer. The shell may include poly(alkyl methacrylate) having a glass transition temperature within this range. For example, the shell may include at least one selected from among poly(methyl methacrylate) (PMMA), poly(ethyl methacrylate), poly(propyl methacrylate), poly(butyl methacrylate), poly(isopropyl methacrylate), poly(isobutyl methacrylate), and poly(cyclohexyl methacrylate), without being limited thereto.

In the organic nanoparticles, the core may be present in an amount of 30 wt% to 99 wt%, specifically 40 wt% to 95 wt%, more specifically 50 wt% to 90 wt%. Within these ranges, the adhesive film can exhibit good foldability in a broad temperature range. In the organic nanoparticles, the shell may be present in an amount of 1 wt% to 70 wt%, specifically 5 wt% to 60 wt%, more specifically 10 wt% to 50 wt%. Within these ranges, the adhesive film can have good foldability over a broad temperature range.

The organic nanoparticles may be optionally present in an amount of 20 wt% or less, specifically 0.1 wt% to 20 wt%, specifically 0.5 wt% to 12 wt%, specifically 0.5 wt% to 8 wt%, in the adhesive film. Within these ranges, the organic nanoparticles can secure good properties in terms of modulus of the adhesive film at high temperature, foldability of the adhesive film at room temperature and high temperature, and viscoelasticity of the adhesive film at low temperature and/or room temperature.

The organic nanoparticles may be optionally present in an amount of 1 part by weight or less, for example, 0.01 parts by weight to 1 part by weight, for example, 0.01 parts by weight to 0.5 parts by weight, relative to 100 parts by weight of the monomer mixture. Within this range, the adhesive film can have improved foldability at high temperature.

The organic nanoparticles may be prepared by typical emulsion polymerization, suspension polymerization, or solution polymerization.

The adhesive composition may further include a silicone-containing (meth)acrylate. The silicone-containing (meth)acrylate may be included in the adhesive film to provide improvement in glass adhesion.

The silicon-containing (meth)acrylate may be a photoreactive mono-terminated silicone-containing (meth) acrylate. This means that the silicone-containing (meth)acrylate has one (meth)acrylate group at one end thereof. The silicone-containing (meth)acrylate may be represented by Formula 1.

[Formula 1]

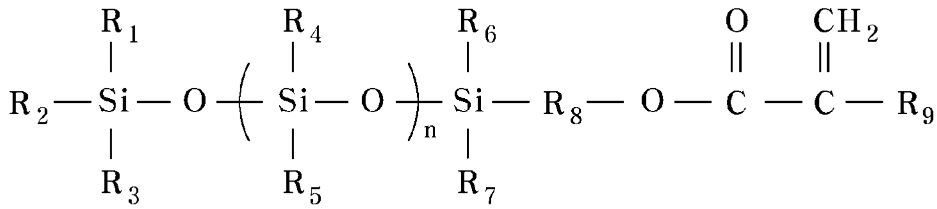

(where $R_1$, $R_2$, $R_3$, $R_4$, $R_5$, $R_6$, and $R_7$ are each independently hydrogen, a $C_1$ to $C_{10}$ alkyl group, a $C_3$ to $C_{10}$ cycloalkyl group, or a $C_6$ to $C_{10}$ aryl group, $R_8$ is a $C_1$ to $C_{10}$ alkylene group or a $C_6$ to $C_{10}$ arylene group, $R_9$ is hydrogen or a methyl group, and n is an integer of 10 to 100).

The silicone-containing (meth)acrylate may be optionally present in an amount of 1 part by weight or less, 0, 0.1, 0.2, 0.3, 0.4, 0.5, 0.6, 0.7, 0.8, 0.9, or 1 part by weight, for example, 0.01 parts by weight to 1 part by weight, for example, 0.01 part by weight to 0.5 part by weight, relative to 100 parts by weight of the monomer mixture. Within this range, the adhesive film can secure further improvement in foldability.

The adhesive composition may further include typical additives known to those skilled in the art. The additives may include at least one selected from among silane coupling agents, pigments, UV absorbents, leveling agents, and antistatic agents, without being limited thereto.

The adhesive film may have a haze of 5% or less. Within this range, the adhesive film does not affect image display when applied to an optical display device. Specifically, the adhesive film may have a haze of 0% to 5%, more specifically 0.1% to 3%.

The adhesive film may have a storage modulus of 0.2 MPa or less at -20°C. Within this range, the adhesive film can provide good foldability at low temperature, at room temperature, and at high temperature. Specifically, the adhesive film may have a storage modulus of 0.001 MPa to 0.2 MPa, more specifically 0.1 MPa to 0.2 MPa, at -20°C.

The adhesive film may have a peel strength of 600 gf/inch or more at 25°C, for example, 600 gf/inch to 1,500 gf/inch. Within this range, the adhesive film can secure good foldability. Herein, "peel strength" refers to T-peel strength. T-peel strength may be measured by a method as in the following experimental examples, wherein an adherend may be a glass plate, for example, an alkali-free glass plate.

The adhesive film may have a thickness of 10 μm to 300 μm, specifically 20 μm to 100 μm. Within this range, the adhesive film can be used in an optical display device.

The composition for adhesive films may be prepared by partially polymerizing the monomer mixture with an initiator, followed by adding the photoinitiator and the UV absorbent. The composition may further include the organic nanoparticles, the crosslinking agent, the additives, and the like described above. Partial polymerization may include solution polymerization, suspension polymerization, photopolymerization, bulk polymerization, or emulsion polymerization. Specifically, solution polymerization may be performed by adding an initiator to the monomer mixture, followed by heating the resulting mixture to 50°C to 100°C. The initiator may include an acetophenone initiator including 2,2-dimethoxy-2-phenylacetophenone, and a photopolymerization initiator, such as 1-hydroxycyclohexylphenylketone and the like. Partial polymerization may achieve a viscosity of 300 cP to 50,000 cP at 25°C, specifically 500 cP to 9,000 cP.

The adhesive film is a pressure sensitive adhesive film and may be prepared by a typical method. For example, the adhesive film may be prepared by coating the composition for adhesive films onto a release film, followed by curing. Curing may include irradiation with light emitted from a low pressure lamp at a wavelength of 300 nm to 400 nm and at a dose of 400 $mJ/cm^2$ to 3,000 $mJ/cm^2$ in an oxygen-free state.

## Base layer

The base layer allows substantially complete transmission of light at a wavelength of 350 nm to 400 nm and may not substantially contain the UV absorbent described above, for example, a UV absorbent having a maximum absorption wavelength of 370 nm to 430 nm, for example, 390 nm to 430 nm, for example, a triazine UV absorbent, such as a hydroxyphenyl triazine UV absorbent. Herein, "base layer may not substantially contain the UV absorbent" means that the content of the UV absorbent described above in the base layer is 0.05 wt% or less, for example, 0 wt% to 0.001 wt%.

The base layer serves to support the adhesive film and may also perform certain optical functions in an optical display device.

In one embodiment, the base layer provides polarization, optical compensation, display quality improvement, and/or conductivity, and may include ultrathin glass (UTG), a window film, a window, a polarizing plate, a color filter, a retardation film, an elliptical polarizing film, a reflective polarizing film, an antireflection film, a compensation film, a brightness enhancing film, an alignment film, a light diffusion film, a glass shatterproof film, a surface protective film, an

OLED element barrier layer, a plastic LCD substrate, and a transparent electrode film including indium tin oxide (ITO), fluorinated tin oxide (FTO), aluminum-doped zinc oxide (AZO), carbon nanotubes (CNT), Ag nanowires, graphene, and the like.

The base layer can be easily manufactured by a person having ordinary knowledge in the art.

For example, a touchpad may be attached to a window or the base layer via the adhesive film, thereby forming a touch panel. Alternatively, the adhesive film may be applied to a typical polarizing film as in the related art.

In other embodiments, the base layer is an optically clear film and an optical member including the base layer and the adhesive film may act as a support layer for a display element. For example, the display element may include a window film and the like. The window film may include the base layer and a window coating layer (for example: a silicone coating layer) formed on the base layer. Specifically, the base layer may have a total transmittance of 90% or more in the visible spectrum and may be formed of at least one resin selected from among cellulose resins including triacetylcellulose and the like, polyester resins including polyethylene terephthalate, polyethylene naphthalate, polybutylene terephthalate, polybutylene naphthalate, and the like, polycarbonate resins, polyimide resins, polystyrene resins, polyacrylate resins including poly(methyl methacrylate) and the like, cyclic olefin polymer resins, acryl resins, and polyamide resins. The base layer may have a thickness of 10 μm to 100 μm, specifically 20 μm to 75 μm, more specifically 30 μm to 50 μm. Within this range, the base layer can be used as the support layer for the display element.

An optical display device according to the present invention includes the optical member according to the present invention.

The optical display device may include a light emitting diode display including an organic light emitting diode, an inorganic light emitting diode, or a combination of the organic and inorganic light emitting diodes, a liquid crystal display, and the like. The optical display device may include a flexible display device. Alternatively, the optical display device may also include a non-flexible display device.

In one embodiment, the optical member may be used to adhesively attach a plurality of optical elements in the flexible display device.

[Mode for Invention]

Next, the present invention will be described in more detail with reference to some examples. However, it should be noted that these examples are provided for illustration only and are not to be construed in any way as limiting the present invention.

**Example 1**

100 parts by weight of a monomer mixture prepared as listed in Table 1 and 0.005 parts by weight of a photoinitiator (Irgacure 651) were sufficiently mixed in a reactor. After replacing dissolved oxygen in the reactor with nitrogen gas, the monomer mixture was subjected to partial polymerization through irradiation with UV light for several minutes under a low-pressure mercury lamp, thereby preparing a composition comprising a partial (meth)acrylic copolymer of the monomer mixture. In Table 1 below, "-" indicates that the corresponding component is not present.

As shown in Table 1, 0.5 parts by weight of a photoinitiator (TPO), 2 parts by weight of a UV absorbent (Tinuvin 477, hydroxy phenyl triazine), and 0.1 parts by weight of a crosslinking agent (dipentaerythritol hexaacrylate (DPHA)) were added to the prepared composition and mixed therewith, thereby preparing a photocurable adhesive composition.

The prepared adhesive composition was coated onto a polyethylene terephthalate (PET) film (light transmittance: 90% at a wavelength of 380 nm) as an optical film and was covered with a PET film as a release film, followed by irradiation with UV light at a dose of 2,000 mJ/cm$^2$, thereby preparing a stack of the optical member (PET film-adhesive film) and the release film.

**Examples 2 and 3**

Each stack of an optical member and a release film was prepared in the same manner as in Example 1 except that the content of each component was changed as listed in Table 1 in preparation of the adhesive composition.

**Example 4**

A stack of an optical member and a release film was prepared in the same manner as in Example 1 except that 0.3 wt% of a monofunctional (meth)acrylate-modified siloxane compound (KF2012, Shin-Etsu) was further added to a monomer mixture after partial polymerization of the monomer mixture in preparation of the adhesive composition.

**Comparative Examples 1 to 3**

Each stack of an optical member and a release film was prepared in the same manner as in Example 1 except that the content of each component was changed as listed in Table 1 in preparation of the adhesive composition.

Details of the adhesive films prepared in Examples and Comparative Examples are shown in Table 1. Evaluation of properties listed in Table 1 was performed on the adhesive films of Examples and Comparative Examples.

(1) Light transmittance (unit: %) and yellowness of adhesive film at a wavelength of 380 nm: The adhesive film was obtained by removing both the optical film and the release film from the stack of the optical member and the release film prepared in each of Examples and Comparative Examples. Light transmittance and yellowness at a wavelength of 380 nm were measured on the adhesive film using a spectrophotometer (CM-3600A, Konica Minolta) in a transmittance mode.

(2) Storage modulus (unit: MPa): Viscoelasticity was measured at a shear rate of 1 rad/sec and at a strain of 1% under the auto strain conditions using a dynamic viscoelasticity meter, a rheometer (ARES DHR-3, TA Instrument Inc.). The adhesive film was obtained by removing both the optical film and the release film from the stack of the optical member and the release film prepared in each of Examples and Comparative Examples. Multiple adhesive films were stacked one above another to form a 500 μm thick laminate, which in turn was punched using an 8 mm-diameter punching machine, thereby preparing a specimen. With a load of 1.0 N applied to the specimen using a stainless steel jig having a diameter of 8 mm, storage modulus of the specimen was measured while heating the specimen from - 60°C to 90°C at a heating rate of 5°C/min, followed by obtaining storage modulus at -20°C.

(3) Peel strength from glass plate (unit: gf/inch): The stack of the optical member and the release film prepared in each of Examples and Comparative Examples was cut to a size of 100 mm × 25 mm (length × width). One surface of a PET (polyethylene terephthalate) film having a size of 150 mm × 25 mm × 75 μm (length × width × thickness) was subjected to corona treatment twice (total dose: 156) at 78 dose using a corona treatment device. After removing the PET release film from one surface of the adhesive sheet, a glass plate (150 mm x 25 mm x 75 μm, length × width × thickness) was attached to the exposed surface of the adhesive film and the remaining PET release film was removed from the other surface of the adhesive sheet, followed by attaching the PET film subjected to corona treatment to the other surface of the adhesive film, thereby preparing a specimen for measurement of peel strength.

The prepared specimen was autoclaved at 50°C and at 3.5 bar for 1,000 sec and secured to a peel strength meter (TA.XT-Plus Texture Analyzer, Stable Micro System Co., Ltd.). With the glass plate secured to the peel strength meter, T-peel strength was measured at 25°C by pulling the PET film from the glass plate at a rate of 50 mm/min.

(4) Foldability: Module specimens were prepared by sequentially stacking a window film, an adhesive film, a polarizer, an adhesive film, and an OLED panel. In preparation of the modules, the window film, the adhesive film, the polarizer, the adhesive film, and the OLED panel as follows were used and the adhesive film was stacked on a polyimide film of the OLED panel.

- Window film: A PET film (thickness: 100 μm, Cosmoshine TA015, Toyobo Co., Ltd.) was used.
- Adhesive film: The adhesive films (thickness: 15 μm) prepared in Examples and Comparative Examples were used.
- Polarizer: An iodine-dyed PVA resin was used. An 80 μm thick polyvinyl alcohol film (degree of saponification: 99.5, degree of polymerization: 2,000) was dipped in a 0.3% iodine aqueous solution for dyeing and stretched to an elongation of 5.0 in the MD. Then, the stretched polyvinyl alcohol film was dipped in a 3% boric acid solution and in a 2% potassium iodide aqueous solution and subject to color correction, followed by drying at 50°C for 4 min, thereby preparing a polarizer (thickness: 25 μm).
- OLED Panel: A PET film (thickness: 100 μm, Cosmoshine TA015, Toyobo Co., Ltd.) was used.

Each of the prepared module specimens was cut to a size of 170 mm x 110 mm (length x width), followed by 100,000 cycles of folding at -20°C to evaluate generation of bubbles, cracks and delamination of the module specimen. Upon folding, the specimen was subjected to folding in the longitudinal direction of the specimen and in the OLED panel direction at a folding rate of 30 cycles per minute such that a bent portion of the specimen had a radius of curvature of 1.5 mm, in which 1 cycle refers to an operation of folding the adhesive film to have the radius of curvature, followed by unfolding the adhesive film back to 180°. No generation of bubbles, cracks and delamination was rated as good and generation of at least one among bubbles, cracks and delamination was rated as poor.

Table 1

| | | Example | | | | Comparative Example | | |
|---|---|---|---|---|---|---|---|---|
| | | 1 | 2 | 3 | 4 | 1 | 2 | 3 |
| Monomer | EHA | 82 | 80 | 78 | 82 | 82 | 82 | 83 |
| | HBA | 7.5 | 7.5 | 7.5 | 7.5 | 7.5 | 7.5 | 7.5 |
| | EHDG | 9.5 | 9.5 | 9.5 | 9.5 | 9.5 | 9.5 | 9.5 |
| | ACMO | 1 | 3 | 5 | 1 | 1 | 1 | - |
| Photoinitiator | TPO | 0.5 | 0.5 | 0.5 | 0.5 | 0.5 | 0.5 | 0.5 |
| Crosslinking agent | DPHA | 0.1 | 0.1 | 0.1 | 0.1 | 0.1 | 0.1 | 0.1 |
| Siloxane acrylate | KF2012 | - | - | - | 0.3 | - | - | - |
| UV absorbent | Tinuvin 477 | 2 | 2 | 2 | 2 | - | - | 2 |
| | Tinuvin 384-2 | - | - | - | - | - | 2 | - |
| Light transmittance | @380nm | 2.5 | 2.3 | 2.8 | 2.7 | 89.4 | 39.8 | 2.8 |
| Yellowness index (YI) | | 0.31 | 0.25 | 0.33 | 0.43 | 0.22 | 0.17 | 0.33 |
| Storage modulus | | 0.1 | 0.11 | 0.13 | 0.1 | 0.12 | 0.1 | 0.12 |
| Peel strength | | 650 | 678 | 695 | 625 | 645 | 628 | 530 |
| Foldability | | Good | Good | Good | Good | Good | Good | Poor |

*EHA: 2-ethylhexyl acrylate
HBA: 4-hydroxybutyl acrylate
EHDG: Di(ethylene glycol) 2-ethylhexyl ether acrylate
ACMO: Acryloylmorpholine
DPHA: Dipentaerythritol hexaacrylate
KF2012: Siloxane monofunctional acrylate
Tinuvin 477: Hydroxyphenyl triazine UV absorbent (2-hydroxyphenyl-s-triazine)
Tinuvin 384-2: Hydroxyphenylbenzotriazole UV absorbent

As shown in Table 1, the adhesive film in the optical member according to the present invention had low light transmittance at a wavelength of 350 nm to 400 nm and high cohesion, thereby providing good peel strength and good foldability. Conversely, the adhesive films of Comparative Examples could not provide the effect of the present invention.

It should be understood that various modifications, changes, alterations, and equivalent embodiments can be made by those skilled in the art without departing from the spirit and scope of the invention.

## Claims

**1.** An optical member comprising:

a base layer having a light transmittance of 80% or more at a wavelength of 350 nm to 400 nm; and
an adhesive film adhesively attached to one surface or the other surface of the base layer and having a light transmittance of 4% or less at a wavelength of 350 nm to 400 nm.

**2.** The optical member as claimed in claim 1, wherein the adhesive film contains a triazine UV absorbent.

**3.** The optical member as claimed in claim 2, wherein the triazine UV absorbent comprises a hydroxyphenyl triazine UV absorbent.

**4.** The optical member as claimed in claim 2, wherein the triazine UV absorbent is present in an amount of 0.1 wt% to 4 wt% in the adhesive film.

**5.** The optical member as claimed in claim 1, wherein the adhesive film has a peel strength of 600 gf/inch or more.

6. The optical member as claimed in claim 1, wherein the adhesive film has a storage modulus of 0.2 MPa or less at -20°C.

7. The optical member as claimed in claim 1, wherein the adhesive film is formed of a thermosetting adhesive composition or a photocurable adhesive composition.

8. The optical member as claimed in claim 1, wherein the adhesive film is formed of a photocurable adhesive composition comprising a UV absorbent, a polymer of a monomer mixture, and a photoinitiator.

9. The optical member as claimed in claim 8, wherein the monomer mixture comprises an alkyl group-containing (meth)acrylic monomer, a hydroxyl group-containing (meth)acrylic monomer, and a heteroalicyclic group-containing (meth)acrylic monomer.

10. The optical member as claimed in claim 9, wherein the heteroalicyclic group-containing (meth)acrylic monomer is present in an amount of 1 wt% to 10 wt% in the monomer mixture.

11. The optical member as claimed in claim 9, wherein the monomer mixture further comprises an alkylene glycol group-containing (meth)acrylic monomer.

12. The optical member as claimed in claim 11, wherein the heteroalicyclic group-containing (meth)acrylic monomer and the alkylene glycol group-containing (meth)acrylic monomer are present in a total amount of 5 wt% to 20 wt% in the monomer mixture.

13. The optical member as claimed in claim 8, wherein the photoinitiator is present in an amount of 0.0001 parts by weight to 5 parts by weight relative to 100 parts by weight of the monomer mixture.

14. The optical member as claimed in claim 8, wherein the photocurable adhesive composition comprises at least one selected from among a crosslinking agent and a silicone-containing (meth)acrylate.

15. The optical member as claimed in claim 14, wherein the silicone-containing (meth)acrylate is by Formula 1:

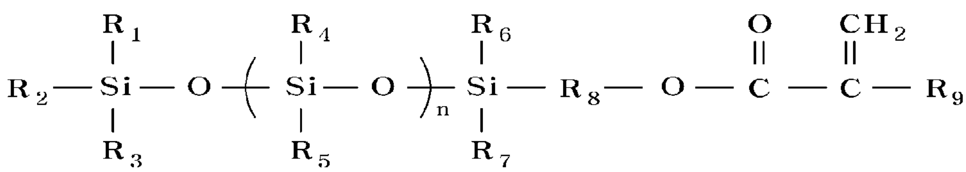

(where $R_1$, $R_2$, $R_3$, $R_4$, $R_5$, $R_6$, and $R_7$ are each independently hydrogen, a $C_1$ to $C_{10}$ alkyl group, a $C_3$ to $C_{10}$ cycloalkyl group, or a $C_6$ to $C_{10}$ aryl group; $R_8$ is a $C_1$ to $C_{10}$ alkylene group or a $C_6$ to $C_{10}$ arylene group; $R_9$ is hydrogen or a methyl group; n is an integer of 10 to 100).

16. The optical member as claimed in claim 1, wherein the base layer contains 0.05 wt% or less of a triazine UV absorbent having a maximum absorption wavelength of 370 nm to 430 nm.

17. An optical display device comprising the optical member as claimed in any one of claims 1 to 16.

**INTERNATIONAL SEARCH REPORT**

International application No.
**PCT/KR2023/021298**

**A. CLASSIFICATION OF SUBJECT MATTER**

**G02B 5/20**(2006.01)i; **G02B 5/22**(2006.01)i; **B32B 7/12**(2006.01)i; **B32B 7/023**(2019.01)i; **C09J 7/38**(2018.01)i; **C09J 11/04**(2006.01)i; **C09J 133/06**(2006.01)i; **C09J 143/04**(2006.01)i; **C08K 5/3492**(2006.01)i

According to International Patent Classification (IPC) or to both national classification and IPC

**B. FIELDS SEARCHED**

Minimum documentation searched (classification system followed by classification symbols)

G02B 5/20(2006.01); C09J 11/00(2006.01); C09J 133/00(2006.01); C09J 133/06(2006.01); C09J 133/14(2006.01); C09J 7/00(2006.01); C09J 7/20(2018.01); C09J 7/38(2018.01); G02B 5/30(2006.01); G02F 1/1335(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 기재(base), 파장(wavelength), 점착필름(adhesive film), 광학부재(optical member)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-214722 A (NITTO DENKO CORP.) 19 December 2019 (2019-12-19)<br>See paragraphs [0121]-[0137], claim 1 and figure 2. | 1-17 |
| Y | KR 10-2021-0115877 A (SAMSUNG SDI CO., LTD.) 27 September 2021 (2021-09-27)<br>See claims 1-3. | 1-17 |
| Y | KR 10-2021-0144204 A (SAMSUNG SDI CO., LTD.) 30 November 2021 (2021-11-30)<br>See claim 3. | 6 |
| Y | KR 10-2021-0130674 A (SAMSUNG SDI CO., LTD.) 01 November 2021 (2021-11-01)<br>See paragraphs [0068]-[0112]. | 8-15 |
| Y | KR 10-2019-0004562 A (SAMSUNG SDI CO., LTD.) 14 January 2019 (2019-01-14)<br>See claims 1 and 4. | 9-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 April 2024** | **02 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/021298**

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0041718 A (SAMSUNG SDI CO., LTD.) 22 April 2020 (2020-04-22) See claim 7. | 15 |
| Y | KR 10-2018-0098240 A (NITTO DENKO CORPORATION) 03 September 2018 (2018-09-03) See claim 3. | 16 |

Form PCT/ISA/210 (second sheet) (July 2022)

**INTERNATIONAL SEARCH REPORT**
**Information on patent family members**

International application No.
**PCT/KR2023/021298**

| Patent document cited in search report | | | Publication date (day/month/year) | Patent family member(s) | | | Publication date (day/month/year) |
|---|---|---|---|---|---|---|---|
| JP | 2019-214722 | A | 19 December 2019 | JP | 6726789 | B2 | 22 July 2020 |
| KR | 10-2021-0115877 | A | 27 September 2021 | CN | 113403005 | A | 17 September 2021 |
| | | | | CN | 113403005 | B | 29 November 2022 |
| | | | | US | 11787985 | B2 | 17 October 2023 |
| | | | | US | 2021-0284878 | A1 | 16 September 2021 |
| KR | 10-2021-0144204 | A | 30 November 2021 | CN | 115667443 | A | 31 January 2023 |
| | | | | US | 2023-0159802 | A1 | 25 May 2023 |
| | | | | WO | 2021-235771 | A1 | 25 November 2021 |
| KR | 10-2021-0130674 | A | 01 November 2021 | CN | 111019566 | A | 17 April 2020 |
| | | | | CN | 111019566 | B | 05 July 2022 |
| | | | | CN | 114672267 | A | 28 June 2022 |
| | | | | KR | 10-2020-0040628 | A | 20 April 2020 |
| | | | | KR | 10-2317975 | B1 | 27 October 2021 |
| | | | | TW | 202014489 | A | 16 April 2020 |
| | | | | TW | I720646 | B | 01 March 2021 |
| | | | | US | 2020-0115594 | A1 | 16 April 2020 |
| KR | 10-2019-0004562 | A | 14 January 2019 | CN | 109207103 | A | 15 January 2019 |
| | | | | CN | 109207103 | B | 26 November 2021 |
| | | | | KR | 10-2019-0030524 | A | 22 March 2019 |
| | | | | KR | 10-2126048 | B1 | 23 June 2020 |
| KR | 10-2020-0041718 | A | 22 April 2020 | | None | | |
| KR | 10-2018-0098240 | A | 03 September 2018 | CN | 108369305 | A | 03 August 2018 |
| | | | | CN | 108369305 | B | 08 June 2021 |
| | | | | CN | 108431959 | A | 21 August 2018 |
| | | | | CN | 108431959 | B | 01 September 2023 |
| | | | | CN | 108476563 | A | 31 August 2018 |
| | | | | CN | 108476563 | B | 05 May 2020 |
| | | | | CN | 112433287 | A | 02 March 2021 |
| | | | | CN | 112433287 | B | 26 May 2023 |
| | | | | CN | 113376894 | A | 10 September 2021 |
| | | | | CN | 116144292 | A | 23 May 2023 |
| | | | | CN | 116179119 | A | 30 May 2023 |
| | | | | JP | 2017-120363 | A | 06 July 2017 |
| | | | | JP | 2017-165941 | A | 21 September 2017 |
| | | | | JP | 2017-168430 | A | 21 September 2017 |
| | | | | JP | 2020-184082 | A | 12 November 2020 |
| | | | | JP | 2021-185570 | A | 09 December 2021 |
| | | | | JP | 2022-000694 | A | 04 January 2022 |
| | | | | JP | 2022-160450 | A | 19 October 2022 |
| | | | | JP | 2023-027214 | A | 01 March 2023 |
| | | | | JP | 2023-075141 | A | 30 May 2023 |
| | | | | JP | 6830350 | B2 | 17 February 2021 |
| | | | | JP | 7193592 | B2 | 20 December 2022 |
| | | | | JP | 7291277 | B2 | 14 June 2023 |
| | | | | KR | 10-2018-0097535 | A | 31 August 2018 |
| | | | | KR | 10-2018-0098239 | A | 03 September 2018 |
| | | | | KR | 10-2023-0020020 | A | 09 February 2023 |
| | | | | TW | 201730599 | A | 01 September 2017 |
| | | | | TW | 201732323 | A | 16 September 2017 |

Form PCT/ISA/210 (patent family annex) (July 2022)

**INTERNATIONAL SEARCH REPORT**
**Information on patent family members**

International application No.
**PCT/KR2023/021298**

| Patent document cited in search report | Publication date (day/month/year) | Patent family member(s) | | | Publication date (day/month/year) |
|---|---|---|---|---|---|
| | | TW | 201736550 | A | 16 October 2017 |
| | | TW | 202111360 | A | 16 March 2021 |
| | | TW | I711843 | B | 01 December 2020 |
| | | TW | I746487 | B | 21 November 2021 |
| | | TW | I775737 | B | 01 September 2022 |
| | | WO | 2017-110332 | A1 | 29 June 2017 |
| | | WO | 2017-111034 | A1 | 29 June 2017 |
| | | WO | 2017-111038 | A1 | 29 June 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013072951 A